# EUROPEAN PATENT APPLICATION

(11) **EP 3 247 116 A1**
(43) Date of publication of application: **22.11.2017**
(21) Application number: 17180454.5
(22) Date of filing: 25.07.2013
(51) Int. Cl.: H04N 19/597, H04N 19/52, H04N 19/463, H04N 19/176, H04N 19/513

(54) **METHOD OF CONSTRAIN DISPARITY VECTOR DERIVATION IN 3D VIDEO CODING**

(30) Priority: 27.07.2012 US 201261676686 P
(62) Divisional of application: 13822507.3
(71) Applicant: HFI Innovation Inc., Hsinchu County 302 (TW)
(72) Inventor: CHEN, Yi-Wen, 420 Taichung City (TW); LIN, Jian-Liang, 270 Su'ao Township, Yilan County (TW); AN, Jicheng, Beijing, 100037 (CN); HUANG, Yu-Wen, 104 Taipei City (TW); LEI, Shaw-Min, 302 Zhubei City, Hsinchu County (TW)
(74) Representative: Hoefer & Partner Patentanwälte mbB

(57) **Abstract**

A method for three-dimensional video encoding or decoding are disclosed. In one embodiment, the method constrains the disparity vector (DV) to generate a constrained DV, wherein horizontal, vertical, or both components of the constrained DV is constrained to be zero or within a range from M to N units of DV precision, and M and N are integers. In another embodiment, a derived DV for DV based motion-compensated-prediction is determined from a constrained neighboring block set of the current block. In yet another embodiment, a derived disparity vector is derived to replace an inter-view Merge candidate if the inter-view Merge candidate of the current block is not available or not valid. In yet another embodiment, a DV difference (DVD) or a motion vector difference (MVD) for the current block is determined according to a DV and the DVD/MVP is constrained to be zero or within a range.

## Description

### CROSS REFERENCE TO RELATED APPLICATIONS

The present invention claims priority to U.S. Provisional Patent Application, Serial No. 61/676,686, filed July27, 2012, entitled "Disparity vector derivation for video coding". The U.S. Provisional Patent Application is hereby incorporated by reference in its entirety.

### TECHNICAL FIELD

The present invention relates to three-dimensional video coding. In particular, the present invention relates to disparity vector derivation for 3D video coding.

### BACKGROUND

Three-dimensional (3D) television has been a technology trend in recent years that intends to bring viewers sensational viewing experience. Various technologies have been developed to enable 3D viewing. Among them, the multi-view video is a key technology for 3DTV application among others. The traditional video is a two-dimensional (2D) medium that only provides viewers a single view of a scene from the perspective of the camera. However, the multi-view video is capable of offering arbitrary viewpoints of dynamic scenes and provides viewers the sensation of realism.

The multi-view video is typically created by capturing a scene using multiple cameras simultaneously, where the multiple cameras are properly located so that each camera captures the scene from one viewpoint. Accordingly, the multiple cameras will capture multiple video sequences corresponding to multiple views. In order to provide more views, more cameras have been used to generate multi-view video with a large number of video sequences associated with the views. Accordingly, the multi-view video will require a large storage space to store and/or a high bandwidth to transmit. Therefore, multi-view video coding techniques have been developed in the field to reduce the required storage space or the transmission bandwidth.

A straightforward approach may be to simply apply conventional video coding techniques to each single-view video sequence independently and disregard any correlation among different views. Such coding system would be very inefficient. In order to improve efficiency of multi-view video coding, typical multi-view video coding exploits inter-view redundancy. Therefore, most 3D Video Coding (3DVC) systems take into account of the correlation of video data associated with multiple views and depth maps. The standard development body, the Joint Video Team of the ITU-T Video Coding Experts Group (VCEG) and the ISO/IEC Moving Picture Experts Group (MPEG), extended H.264/MPEG-4 AVC to multi-view video coding (MVC) for stereo and multi-view videos.

The MVC adopts both temporal and spatial predictions to improve compression efficiency. During the development of MVC, some macro block-level coding tools are proposed, including illumination compensation, adaptive reference filtering, motion skip mode, and view synthesis prediction. These coding tools are proposed to exploit the redundancy between multiple views. Illumination compensation is intended for compensating the illumination variations between different views. Adaptive reference filtering is intended to reduce the variations due to focus mismatch among the cameras. Motion skip mode allows the motion vectors in the current view to be inferred from the other views. View synthesis prediction is applied to predict a picture of the current view from other views.

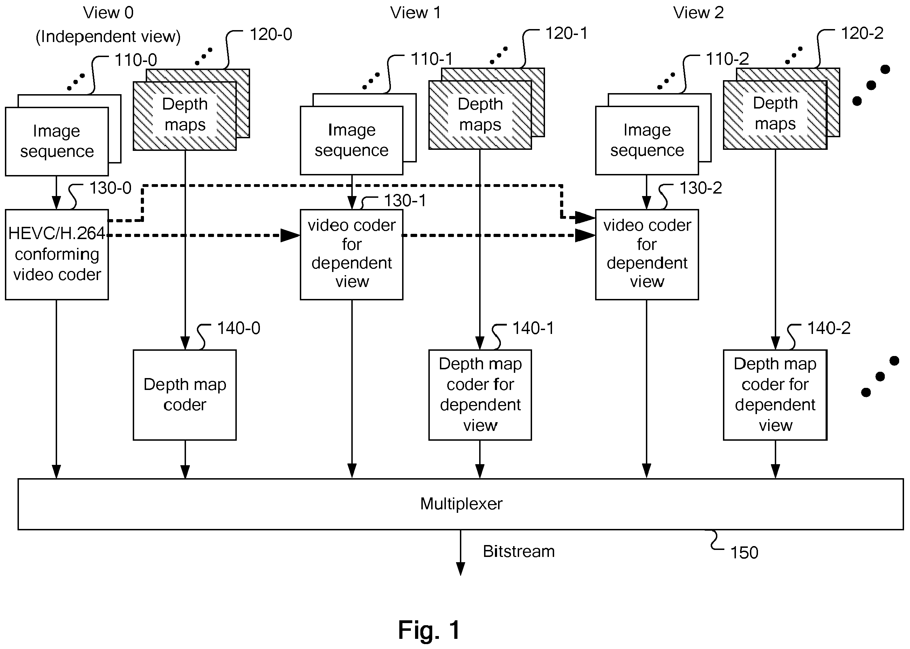

In the MVC, however, the depth maps and camera parameters are not coded. In the recent standardization development of new generation 3D Video Coding (3DVC), the texture data, depth data, and camera parameters are all coded. For example, Fig. 1 illustrates generic prediction structure for 3D video coding, where a standard conforming video coder is used for the base-view video. The incoming 3D video data consists of images (110-0, 110-1, 110-2, ...) corresponding to multiple views. The images collected for each view form an image sequence for the corresponding view. Usually, the image sequence 110-0 corresponding to a base view (also called an independent view) is coded independently by a video coder 130-0 conforming to a video coding standard such as H.264/AVC or HEVC (High Efficiency Video Coding). The video coders (130-1, 130-2, ...) for image sequences associated with the dependent views (i.e., views 1, 2, ...)further utilize inter-view prediction in addition to temporal prediction. The inter-view predictions are indicated by the short-dashed lines in Fig. 1.

In order to support interactive applications, depth maps (120-0, 120-1, 120-2, ...)associated with a scene at respective views are also included in the video bit stream. In order to reduce data associated with the depth maps, the depth maps are compressed using depth map coder (140-0, 140-1, 140-2,...) and the compressed depth map data is included in the bit stream as shown in Fig. 1. A multiplexer 150 is used to combine compressed data from image coders and depth map coders. The depth information can be used for synthesizing virtual views at selected intermediate viewpoints. An image corresponding to a selected view may be coded using inter-view prediction based on an image corresponding to another view. In this case, the image for the selected view is referred as dependent view.

In the reference software for HEVC based 3D video coding version 3.1 (HTM3.1), inter-view candidate is added as a motion vector (MV) or disparity vector (DV) candidate for Inter, Merge and Skip mode in order to re-use previously coded motion information of adjacent views. In HTM3.1, the basic unit for compression, termed as *coding unit* (CU), is a 2Nx2N square block. Each CU can be recursively split into four smaller CUs until a predefined minimum size is reached. Each CU contains one or more prediction units (PUs). In the remaining parts of this document, the term "current block" refers to a PU unless it is explicitly specified.

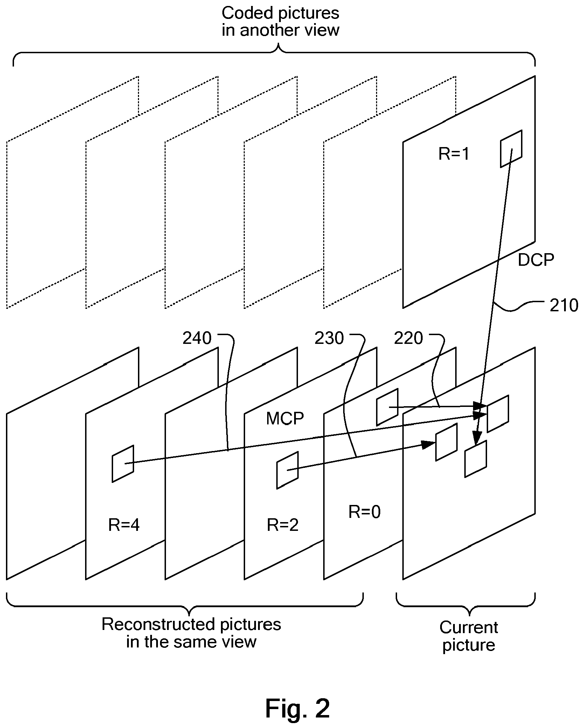

To share the previously coded texture information of adjacent views, a technique known as disparity-compensated prediction (DCP) has been included in HTM3.1 as an alternative to motion-compensated prediction (MCP). MCP refers to an inter picture prediction that uses previously coded pictures of the same view, while DCP refers to an inter picture prediction that uses previously coded pictures of other views in the same access unit. Fig. 2 illustrates an example of 3D video coding system incorporating MCP and DCP. The vector (210) used for DCP is termed as disparity vector (DV), which is analog to the motion vector (MV) used in MCP. Fig. 2 illustrates three MVs (220, 230 and 240) associated with MCP. Moreover, the DV of a DCP block can also be predicted by the disparity vector predictor (DVP) candidate derived from neighboring blocks or the temporal collocated blocks that also use inter-view reference pictures. In HTM3.1, when deriving an inter-view Merge candidate for Merge/Skip modes, if the motion information of corresponding block is not available or not valid, the inter-view Merge candidate is replaced by a DV.

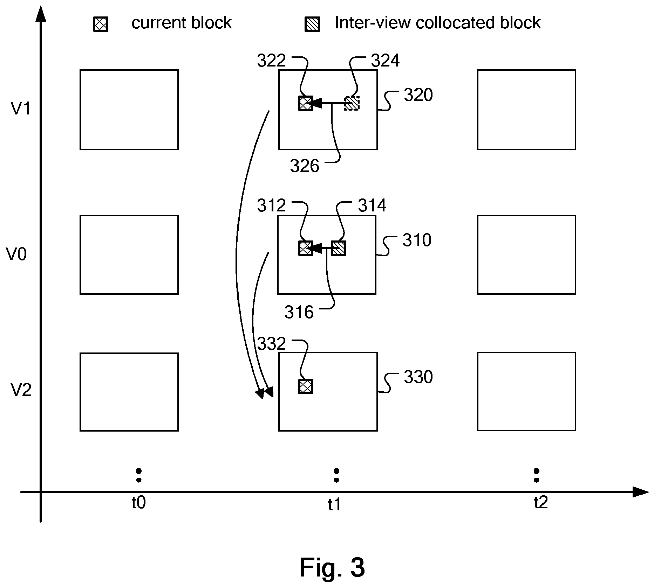

To share the previously coded residual information of adjacent views, the residual signal of the current block (PU) can be predicted by the residual signals of the corresponding blocks in the inter-view pictures as shown in Fig.3. The corresponding blocks can be located by respective DVs. The video pictures and depth maps corresponding to a particular camera position are indicated by a view identifier (i.e., V0, V1 and V2 in Fig.3). All video pictures and depth maps that belong to the same camera position are associated with the same view Id (i.e., view identifier). The view identifiers are used for specifying the coding order within the access units and detecting missing views in error-prone environments. An access unit includes all video pictures and depth maps corresponding to the same time instant. Inside an access unit, the video picture and, when present, the associated depth map having view Id equal to 0 are coded first, followed by the video picture and depth map having view Id equal to 1, etc. The view with view Id equal to 0 (i.e., V0 in Fig.3) is also referred to as *the base view* or the *independent view.* The base view video pictures can be coded using a conventional HEVC video coder without dependence on other views.

As can be seen in Fig.3, for the current block, motion vector predictor (MVP)/ disparity vector predictor (DVP) can be derived from the inter-view blocks in the inter-view pictures. In the following, inter-view blocks in inter-view picture may be abbreviated as inter-view blocks. The derived candidate is termed as*inter-view candidates,* which can be inter-view MVPs or DVPs. Furthermore, a corresponding block in a neighboring view is termed as an *inter-view block* and the inter-view block is located using the disparity vector derived from the depth information of current block in current picture.

The example shown in Fig, 3 corresponds to a view coding order from V0 (i.e., base view), V1, and V2. The current block in the current picture being coded is in V2. According to HTM3.1, all the MVs of reference blocks in the previously coded views can be considered as an inter-view candidate even if the inter-view pictures are not in the reference picture list of current picture. In Fig. 3, frames 310, 320 and 330 correspond to a video picture or a depth map from views V0, V1 and V2 at time t1 respectively. Block 332 is the current block in the current view, and blocks 312 and 322 are the current blocks in V0 and V1 respectively. For current block 312 in V0, a disparity vector (316) is used to locate the inter-view collocated block (314). Similarly, for current block 322 in V1, a disparity vector (326) is used to locate the inter-view collocated block (324). According to HTM3.1, the motion vectors or disparity vectors associated with inter-view collocated blocks from any coded views can be included in the inter-view candidates. Therefore, the number of inter-view candidates can be rather large, which will require more processing time and large storage space. It is desirable to develop a method to reduce the processing time and or the storage requirement without causing noticeable impact on the system performance in terms of BD-rate or other performance measurement.

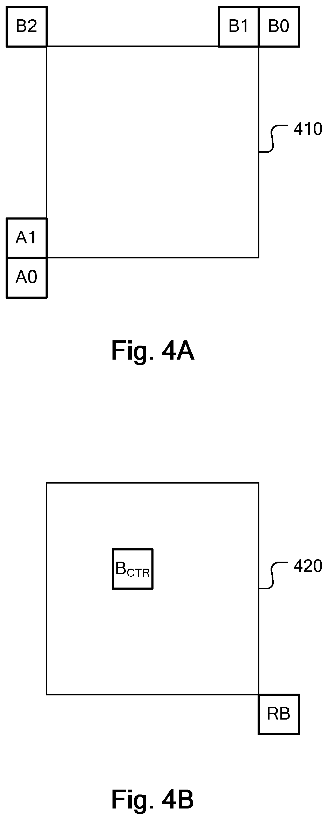

In 3DV-HTM, a disparity vector can be used as a DVP candidate for Inter mode or as a Merge candidate for Merge/Skip mode. A derived disparity vector can also be used as an offset vector for inter-view motion prediction and inter-view residual prediction. When used as an offset vector, the DV is derived from spatial or temporal neighboring blocks as shown in Figs. 4A and 4B. Multiple spatial and temporal neighboring blocks are determined and DV availability of the spatial and temporal neighboring blocks is checked according to a pre-determined order. As shown in Fig. 4A, the spatial neighboring block set includes the location diagonally across from the lower-left corner of the current block (i.e., A0), the location next to the left-bottom side of the current block (i.e., A1),the location diagonally across from the upper-left corner of the current block (i.e., B2), the location diagonally across from the upper-right corner of the current block (i.e., B0), and the location next to the top-right side of the current block (i.e., B1). As shown in Fig. 4B, the temporal neighboring block set includes the location at the center of the current block (i.e., B_{CTR}) and the location diagonally across from the lower-right corner of the current block (i.e., RB) in a temporal reference picture. Instead of the center location, other locations (e.g., a lower-right block) within the current block in the temporal reference picture may also be used. In other words, any block collocated with the current block can be included in the temporal block set. Once a block is identified as having a DV, the checking process will be terminated. An exemplary search order for the spatial neighboring blocks in Fig.4A is(A1, B1, B0, A0, B2). An exemplary search order for the temporal neighboring blocks for the temporal neighboring blocks in Fig.4B is(BR, B_{CTR}). The spatial and temporal neighboring blocks are the same as the spatial and temporal neighboring blocks of AMVP and Merge modes in HEVC.

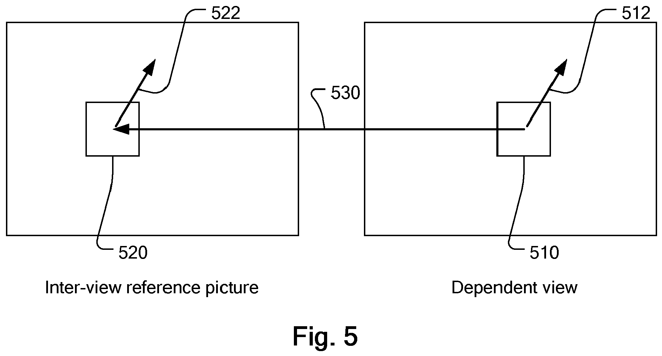

If a DCP coded block is not found in the neighboring block set (i.e., spatial and temporal neighboring blocks as shown in Figs. 4A and 4B), the disparity information obtained from DV-MCP blocks are used. Fig.5 illustrates an example of a DV-MCP block, where the motion information of the DV-MCP block (510) is predicted from a corresponding block (520) in the inter-view reference picture. The location of the corresponding block (520) is specified by a disparity vector (530). The disparity vector used in the DV-MCP block represents a motion correspondence between the current and inter-view reference picture. The motion information (522) of the corresponding block (520) is used to predict motion information (512) of the current block (510) in the current view.

To indicate whether a MCP block is DV-MCP coded and to store the disparity vector for the inter-view motion parameters prediction, two variables are used to represent the motion vector information for each block:
- dvMcpFlag, and
- dvMcpDisparity.

When dvMcpFlag is equal to 1, the dvMcpDisparity is set to indicate that the disparity vector is used for the inter-view motion parameter prediction. In the construction process for the AMVP and Merge candidate list, the dvMcpFlag of the candidate is set to 1 if the candidate is generated by inter-view motion parameter prediction and is set to 0 otherwise. The disparity vectors from DV-MCP blocks are used in following order: A0, A1, B0, B1, B2, Col (i.e., Collocated block, B_{CTR} or RB).

As illustrated in the above discussion, the DV derivation process involves various spatial and temporal neighboring blocks. It is desirable to reduce the complexity of the DV derivation without noticeable impact on system performance.

### SUMMARY

A method for three-dimensional video encoding or decoding are disclosed. In one embodiment, the method constrains the disparity vector to generate a constrained disparity vector, wherein the horizontal component, the vertical component, or both the horizontal and vertical components of the constrained disparity vector is constrained to be zero or within a range from M to N units of DV precision, such as quarter pixels, and M and N are integers. Inter-view predictive encoding or decoding is then applied to the current block based of the current frame on the constrained disparity vector. The inter-view predictive encoding or decoding may include locating a corresponding block in an inter-view picture for disparity compensated prediction (DCP), inter-view motion prediction, or inter-view residual prediction based on the constrained disparity vector. The inter-view predictive encoding or decoding may include predicting a second disparity vector of a DCP block based on the constrained disparity vector. Furthermore, the inter-view predictive encoding or decoding may include replacing an unavailable inter-view motion vector based on the constrained disparity vector if motion information of the corresponding block in the inter-view picture is not available or not valid in inter-view Merge candidate derivation. If optical axes of multiple cameras of the three-dimensional video encoding or decoding system are configured to be parallel in a horizontal/vertical plane and views associated with the multiple cameras are rectified such that no vertical/horizontal disparities exist, the vertical/horizontal component of the disparity vector can be constrained to be zero or within the range from M to N units of DV precision. One syntax element can be signaled in a sequence level, a view level, a picture level, a slice level, an LCU level, a CU level, or a PU level to indicate whether constraining the first disparity vector is turned on or off.

In another embodiment, a derived disparity vector for disparity-vector based motion-compensated-prediction (DV-MCP) of the current block of the current frame is determined from a constrained neighboring block set of the current block. Inter-view predictive encoding or decoding is then applied to the current block based on the derived disparity vector. The constrained neighboring block set may correspond to spatial neighboring blocks on the left side of the current block, collocated blocks of the current block, or both. The search order for determining the derived disparity vector from the constrained neighboring block set may correspond to (A0, A1, Col), (A0, Col) or (A1, Col), where A1 corresponds to the location next to the bottom-left side of the current block, A0 corresponds to the location diagonally across from the lower-left corner of the current block, and Col corresponds to the location collocated with the current block. In another embodiment, a derived disparity vector is derived based on neighboring blocks of the current block in a Largest Coding Unit (LCU), wherein the derived disparity vector is derived from a constrained neighboring block set of the current block, and the constrained neighboring block set excludes any temporal neighboring block located below a bottom boundary of a collocated LCU, wherein the collocated LCU is temporally collocated with the LCU containing the current block. In an embodiment, the temporal neighboring block corresponding to a Right-Bottom (RB) location diagonally across from a bottom right corner of the collocated LCU is excluded if the current block is located at a bottom row of the LCU.

In yet another embodiment, a disparity vector difference (DVD) or a motion vector difference (MVD) for the current block of a current frame is determined according to a first disparity vector (DV) derived for the three-dimensional video encoding or decoding system using disparity compensated prediction (DCP), or according to a second DV for the three-dimensional video encoding or decoding system using Inter mode or advanced motion vector prediction (AMVP) and the second DV is selected as an Inter or AMVP candidate. The DVD or MVD is constrained to generate a constrained DVD or MVD, wherein the horizontal component, the vertical component, or both the horizontal and vertical components of the constrained DVD or MVD can be constrained to be zero and transmission or parsing of the DVD or MVD can be skipped. Inter-view predictive encoding or decoding is applied to the current block based on the constrained DVD or MVD.

In yet another embodiment, a derived disparity vector is derived based on a motion vector of a neighboring block set of the current block according to a search order to replace an inter-view Merge candidate if the inter-view Merge candidate of the current block is not available or not valid. Inter-view predictive encoding or decoding is applied to the current block based on the derived disparity vector as the inter-view Merge candidate. The neighboring block set may consist of A0, A1, B0, B1, B2 and Col, wherein A0, A1, B0, B1, and B2 correspond to the location diagonally across from the lower-left corner, the location next to the bottom-left side, the location diagonally across from the upper-right corner, the location next to the top-right side, and the location diagonally across from the upper-left corner of the current block respectively, Col corresponds to the location collocated with the current block. The derived disparity vector may correspond to the first or the second available motion vector of the neighboring block set of the current block according to the search order. An offset disparity vector can be used as the inter-view Merge candidate, wherein an offset value is added to the vertical or horizontal component of the derived disparity vector to generate the offset disparity vector.

### BRIEF DESCRIPTION OF DRAWINGS

Fig. 1 illustrates an example of prediction structure for a three-dimensional video coding system.
Fig. 2 illustrates an example of three-dimensional coding incorporating disparity-compensated prediction (DCP) as an alternative to motion-compensated prediction (MCP).
Fig. 3 illustrates an example of three-dimensional coding that utilizes previously coded information or residual information of adjacent views.
Figs. 4A-4B illustrate respective spatial neighboring blocks and temporal neighboring blocks of the current block for deriving a disparity vector for the current block.
Fig. 5 illustrates an example of a disparity-vector based motion-compensated prediction (DV-MCP) block, where the location of the corresponding blocks is specified by a disparity vector.
Fig. 6 illustrates an exemplary flowchart of an inter-view predictive coding system incorporating constrained disparity vector according to an embodiment of the present invention.
Fig. 7 illustrates an exemplary flowchart of an inter-view predictive coding system incorporating constrained neighboring block set for deriving a disparity vector according to an embodiment of the present invention, where any upper DV-MCP block of the current block is excluded from disparity vector derivation.
Fig. 8 illustrates an exemplary flowchart of an inter-view predictive coding system incorporating constrained neighboring block set for deriving a disparity vector according to an embodiment of the present invention, where the constrained neighboring block set excludes any temporal neighboring block located below a bottom boundary of a collocated Largest Coding Unit (LCU).
Fig. 9 illustrates an exemplary flowchart of an inter-view predictive coding system incorporating constrained disparity vector difference (DVD) or motion vector difference (MVD) according to an embodiment of the present invention.
Fig. 10 illustrates an exemplary flowchart of an inter-view predictive coding system incorporating a derived disparity vector to replace an inter-view Merge candidate if the inter-view Merge candidate of the current block is not available or not valid according to an embodiment of the present invention.

### DETAILED DESCRIPTION

As mentioned earlier, the inter-view candidate derivation used in HTM3.1 includes a large number of MV/DV candidates especially for a system with a large number of views. Embodiments of the present invention constrain the data range of the derived disparity vector, or the data range of disparity vector difference or motion vector difference based on the derived disparity vector. While the disparity vector for a current block was used in disparity compensated prediction (DCP), embodiments of the present invention extend to other applications using the derived disparity vector. For example, the disparity vector can be used to locate a corresponding block in an inter-view picture for disparity compensated prediction (DCP), inter-view motion prediction, or inter-view residual prediction based on the constrained disparity vector. The derived disparity vector can be used to predict the disparity vector of a DCP block. The derived disparity vector can also be used to replace the inter-view Merge candidate if the inter-view Merge candidate is not available or invalid.

Embodiments according to the present invention constrain the horizontal component, vertical component, or both the horizontal and vertical components of the derived DV. For example, the vertical component of the derived DV can be restricted to be zero or within a range from M to N in the unit of DV precision, such as quarter-pixel, half-pixel, or one-eighth pixel, where M and N are integers. The DV precision typically follows the MV precision, and the unit of MV precision used in the current HEVC standard is quarter pixel. Similarly, the horizontal component of the derived DV can be forced to be zero or within a range from M to N in the unit of DV precision, where M and N are integers. If the optical axes of multiple cameras in a three-dimensional video system are configured to be parallel in a horizontal plane and the views are rectified such that no vertical disparities exist, the vertical component of the DV is forced to be zero or within a range. If the optical axes of multiple cameras are configured to be parallel in a vertical plane and the views are rectified such that no horizontal disparities exist, the horizontal component of the DV is forced to be zero or within a range. One syntax element can be signaled in the sequence level, view level, picture level, slice level, LCU level, CU level, PU level, or other level to indicate that the constraint on the derived DV is turned on or off.

One aspect of the present invention addresses constraints on the selection of neighboring DV-MCP blocks. For example, when deriving the DV, only the neighboring DV-MCP blocks to the left side of the current block in the current view or the collocated blocks of the current block can be used. Since no neighboring DV-MCP block from upper blocks of the current block are used, there is no need to use a line buffer to store the DV information of the upper LCU/macro block row. As an example, the disparity vectors from DV-MCP blocks can be used in the following order: (A0, A1, Col), (A0, Col), (A1, Col), (A0, A1, RB and/or B_{CTR}), (A0, RB and/or B_{CTR}) or (A1, RB and/or B_{CTR}), where Col corresponds to a block in a temporal reference picture collocated with the current block. One syntax element can be signaled in the sequence level, view level, picture level, slice level, LCU level, CU level, PU level, or other level to indicate that the constraint on neighboring DV-MCP blocks is turned on or off.

In another embodiment of the present invention, the temporal neighboring blocks corresponding to the location diagonally across from the lower-right corner (i.e., RB in Fig. 4B) of blocks located at the bottom boundary of the current LCU are excluded from the candidate list during DV derivation. In this case, only the disparity vectors of temporal neighboring blocks corresponding to other locations such as central location B_{CTR} are checked. An embodiment of the present invention excludes any temporal neighboring block located below a bottom boundary of a collocated LCU, wherein the collocated LCU and the LCU containing the current block are temporally collocated. The above constraint may reduce memory requirement and/or allow parallel processing based on LCU rows. One syntax element can be signaled in the sequence level, view level, picture level or slice level to indicate that the constraint on temporal neighboring blocks is turned on or off.

The constraints on the derived DV mentioned above (i.e., constraints on the horizontal component, the vertical component, or both horizontal and vertical components of the derived DV, constraints on the selection of neighboring DV-MCP blocks, and constraints on the selection of the temporal neighboring blocks) can be used in various applications in three-dimensional video coding. For example, the constraints can be applied to the situation when a DV is used to locate the corresponding blocks in a reference picture for DCP, inter-view motion prediction or inter-view residual prediction. The constraints can be applied to the situation where the DV of a DCP block (PU), i.e., DV predictor is to be predicted. The constraints can be applied to the situation in deriving an inter-view merging candidate, where the inter-view merging candidate is replaced by a DV if the motion information of corresponding block is not available or not valid. Furthermore, the constraints can be applied to any situation where the coding system needs to indicate the corresponding blocks in the inter-view pictures.

Another aspect of the present invention addresses constraints on the DV/MV difference (DVD/MVD) during DV derivation. For example, when the derived DV is used to predict a DCP block, the vertical component of DV/MV difference (DVD/MVD) is forced to be zero and there is no need to transmit the vertical component of the DVD or MVD. Similarly, when the DV is used to predict a DCP block, the horizontal component of DV/MV difference is forced to be zero and there is no need to transmit the horizontal component of the DVD or MVD. If the optical axes of multiple cameras in a three-dimensional video system are configured to be parallel in a horizontal plane and the views are rectified such that no vertical disparities exist, the vertical component of DV/MV difference (DVD or MVD) is forced to be zero and there is no need to transmit the vertical component of DVD or MVD. If the optical axes of multiple cameras in a three-dimensional video system are configured to be parallel in a vertical plane and the views are rectified such that no horizontal disparities exist, the horizontal component of DV/MV difference (DVD or MVD) can be forced to be zero and there is no need to transmit the horizontal component of the DVD or MVD. When the vertical component of the derived DV is forced to be zero, the vertical component of DV/MV difference (DVD or MVD) can be forced to be zero and there is no need to transmit the DVD or MVD. When the horizontal component of DV is forced to be zero, the horizontal component of DV/MV difference (DVD or MVD) can also be forced to be zero and there is no need to transmit the DVD or MVD. While the constraints on the DV/MV difference mentioned above always restrict the DVD or MVD to be zero, the vertical component, the horizontal component or both the vertical and horizontal components of DVD or MVD may also be constrained to be within a range from M to N units of DV precision, such as quarter-pixel, half-pixel, or one-eighth pixel, where M and N are integers. One syntax element can be signaled in the sequence level, view level, picture level, slice level, LCU level, CU level, PU level, or other level to indicate if the constraint on the DV/MV difference is turned on or turned off.

Yet another aspect of the present invention addresses constraints on DV derivation for Inter mode or AMVP. For example, in Inter mode or AMVP, the vertical component of DV/MV difference (DVD/MVD) can be forced to be zero and there is no need to transmit the DVD or MVD when the selected candidate is a DV. Similarly, the horizontal component of DV/MV difference (DVD/MVD) is forced to be zero and there is no need to transmit the DVD or MVD. Alternatively, the vertical component, the horizontal component or both the vertical and horizontal components of DVD/MVD can be restricted to be within a range from M to N units of DV precision, where M and N are integers.

When deriving an inter-view Merge candidate, if the motion information of corresponding block is not available or not valid, the inter-view Merge candidate can be replaced by a DV. The DV for replacing the Merge candidate can be derived as follows. The DV may be derived based on the first available DV among candidate blocks. The candidate blocks may correspond to the spatial neighboring blocks and temporal neighboring blocks, or the spatial DV-MCP blocks and temporal DV-MCP blocks. In one embodiment, only the horizontal or vertical component of the DV derived based on the first available DV of spatial and temporal neighboring blocks or DV-MCP blocks is used as the DV for replacing the inter-view Merge candidate. The DV for replacing the Merge candidate can also be derived by adding an offset value to the horizontal or vertical component of the DV derived based on the first available DV among candidate blocks. The offset value can be any integer number, such as -1, 1, -2, 2, -4 or 4.The DV can also be the second available DV among the candidate blocks.

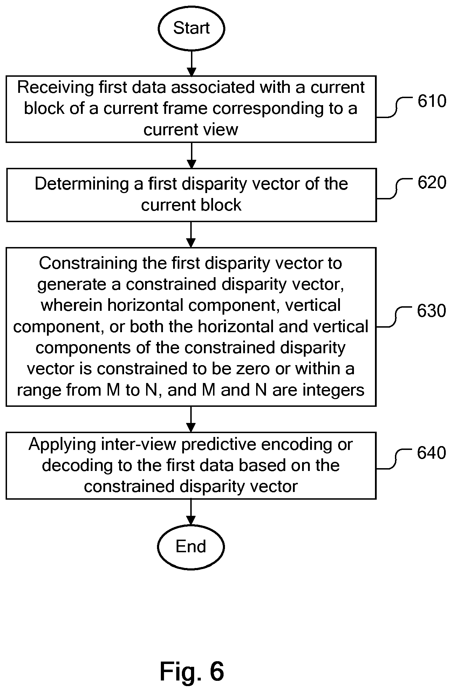

Fig. 6 illustrates an exemplary flowchart of a three-dimensional encoding or decoding system incorporating a constrained disparity vector according to an embodiment of the present invention. The system receives first data associated with the current texture block of the current texture frame corresponding to the current view as shown in step 610. For encoding, the first data associated with the current texture block corresponds to original pixel data, depth data, or other information associated with the current block (e.g., motion vector, disparity vector, motion vector difference, or disparity vector difference) to be coded. The first data may also correspond to residue pixel data to be inter-view predicted. In the latter case, the residue pixel data is further predicted using inter-view prediction to generate another residue data of the residue pixel data. For decoding, the first data corresponds to the residue data (residual pixel data or depth data) or inter-view residue data of another residual data to be used to reconstruct the pixel data or depth data, or other compressed or coded information (e.g., motion vector, disparity vector, motion vector difference, or disparity vector difference) associated with the current block. The first data may be retrieved from storage such as a computer memory, buffer (RAM or DRAM) or other media. The first data may also be received from a processor such as a controller, a central processing unit, a digital signal processor or electronic circuits that produce the first data. A disparity vector for the current block is determined as shown in step 620. The disparity vector is then constrained to generate a constrained disparity vector as shown in step 630, wherein the horizontal component, the vertical component, or both the horizontal and vertical components of the constrained disparity vector is constrained to be zero or within a range from M to N units of DV precision, and M and N are integers. Inter-view predictive encoding or decoding is applied to the first data based on the constrained disparity vector.

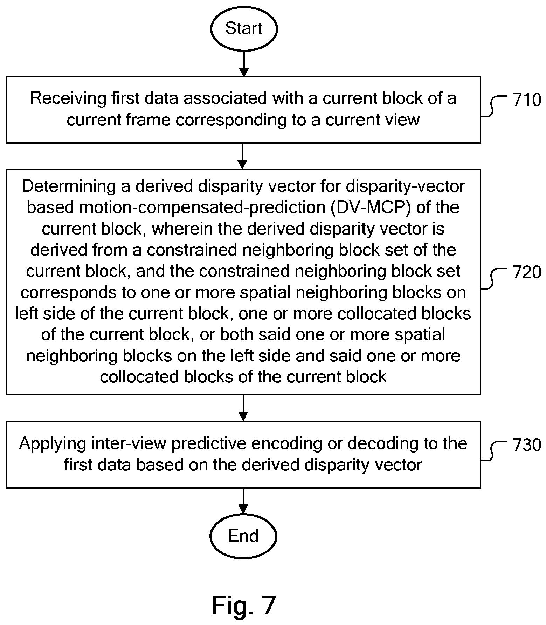

Fig. 7 illustrates an exemplary flowchart of a three-dimensional encoding or decoding system incorporating a constrained neighboring block set according to an embodiment of the present invention. The system receives first data associated with the current texture block of the current texture frame corresponding to the current view as shown in step 710, which is similar to step 610 of Fig. 6. A derived disparity vector for disparity-vector based motion-compensated-prediction (DV-MCP) of the current block is then determined in step 720. The derived disparity vector can be derived from a constrained neighboring block set of the current block. The constrained neighboring block set corresponds to spatial neighboring blocks on the left side of the current block, collocated blocks of the current block, or both. After the derived disparity vector is obtained, inter-view predictive encoding or decoding is applied to the first data based on the derived disparity vector as shown in step 730.

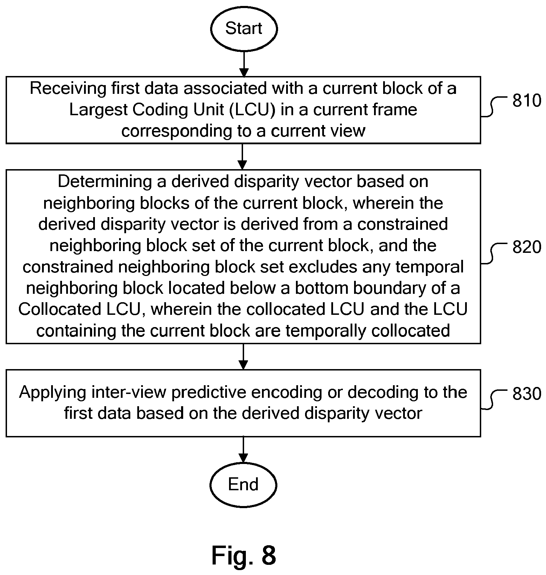

Fig. 8 illustrates an exemplary flowchart of a three-dimensional encoding or decoding system incorporating a constrained neighboring block set according to an embodiment of the present invention. The system receives first data associated with the current texture block of a LCU in the current texture frame corresponding to the current view as shown in step 810, which is similar to step 610 of Fig. 6. A derived disparity vector is derived based on neighboring blocks of the current block as shown in step 820. The derived disparity vector is derived from a constrained neighboring block set of the current block, and the constrained neighboring block set excludes any temporal neighboring block located below a bottom boundary of a collocated LCU, wherein the collocated LCU and the LCU containing the current block are temporally collocated. For example, the temporal neighboring block corresponding to a Right-Bottom (RB) location diagonally across from a bottom right corner of the collocated LCU is excluded from the constrained neighboring block set if the current block is located at a bottom row of the LCU. After the derived disparity vector is obtained, inter-view predictive encoding or decoding is applied to the first data based on the derived disparity vector as shown in step 830.

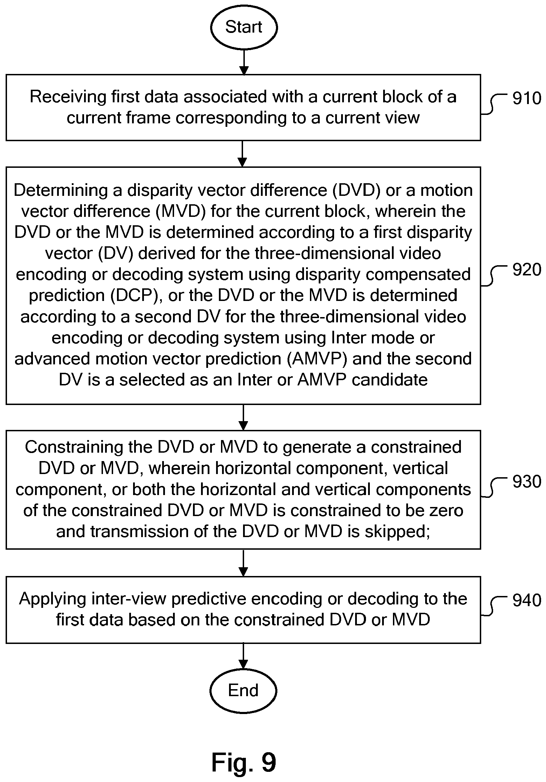

Fig. 9 illustrates an exemplary flowchart of a three-dimensional encoding or decoding system incorporating a constrained disparity vector difference (DVD) or motion vector difference (MVD) according to an embodiment of the present invention. The system receives first data associated with a current texture block of a current texture frame corresponding to a current view as shown in step 910, which is similar to step 610 of Fig. 6. The disparity vector difference (DVD) or motion vector difference (MVD) for the current block is determined in step 920. The DVD or MVD can be determined according to the disparity vector (DV) derived for the three-dimensional video encoding or decoding system using disparity compensated prediction (DCP). The DVD or the MVD can be determined according to the DV for the three-dimensional video encoding or decoding system using Inter mode or advanced motion vector prediction (AMVP) and the DV is a selected as an Inter or AMVP candidate. Inter-view predictive encoding or decoding is then applied to the first data based on the constrained DVD or MVD as shown in step 930.

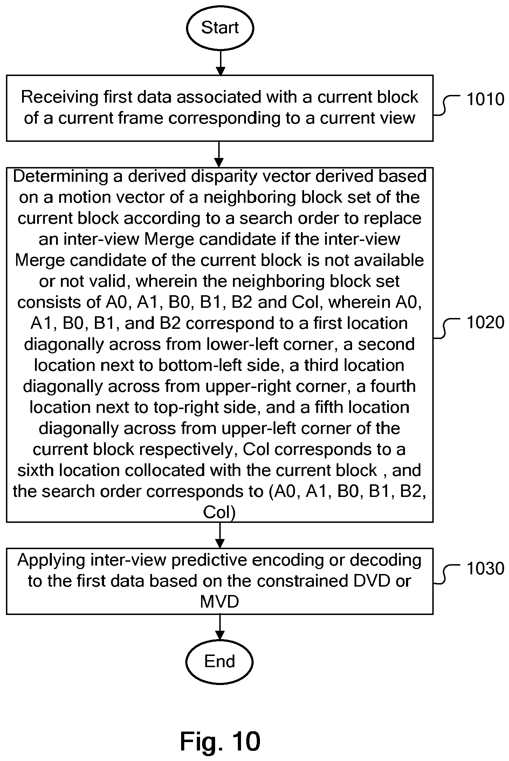

Fig. 10 illustrates an exemplary flowchart of a three-dimensional encoding or decoding system incorporating a replacing disparity vector for unavailable or invalid inter-view Merge candidate according to an embodiment of the present invention. The system receives first data associated with a current texture block of a current texture frame corresponding to a current view as shown in step 1010, which is similar to step 610 of Fig. 6. A derived disparity vector is determined in step 1020 based on a motion vector of a neighboring block set of the current block according to a search order to replace an inter-view Merge candidate if the inter-view Merge candidate of the current block is not available or not valid. The neighboring block set consists of A0, A1, B0, B1, B2 and Col, wherein A0, A1, B0, B1, and B2 correspond to a location diagonally from lower-left corner, a location next to bottom-left side, a location diagonally across from the upper-right corner, a location next to top-right side, and a location diagonally across from the upper-left corner of the current block respectively, Col corresponds to a location collocated with the current block. The inter-view predictive encoding or decoding is applied to the first data based on the derived disparity vector as the inter-view Merge candidate as shown in step 1030.

The flowcharts shown above are intended to illustrate examples of inter-view prediction using the disparity vector. A person skilled in the art may modify each step, re-arranges the steps, split a step, or combine steps to practice the present invention without departing from the spirit of the present invention.

The above description is presented to enable a person of ordinary skill in the art to practice the present invention as provided in the context of a particular application and its requirement. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software codes, or a combination of both. For example, an embodiment of the present invention can be a circuit integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the spirit and scope of the invention.

The invention may be embodied in other specific forms without departing from its spirit or essential characteristics. The described examples are to be considered in all respects only as illustrative and not restrictive. The scope of the invention is therefore, indicated by the appended claims rather than by the foregoing description. All changes which come within the meaning and range of equivalency of the claims are to be embraced within their scope.

The present invention can also be described by means of the following clauses:
1. A method for three-dimensional video encoding or decoding, the method comprising:
   receiving first data associated with a current block of a current frame corresponding to a current view;
   determining a first disparity vector for the current block;
   constraining the first disparity vector to generate a constrained disparity vector, wherein horizontal component, vertical component, or both the horizontal and vertical components of the constrained disparity vector is constrained to be zero or within a range from M to N units of disparity vector (DV) precision, and M and N are integers; and
   applying inter-view predictive encoding or decoding to the first data based on the constrained disparity vector.
2. The method of clause 1, wherein said inter-view predictive encoding or decoding includes:
   locating a corresponding block in an inter-view picture for disparity compensated prediction (DCP), inter-view motion prediction, or inter-view residual prediction based on the constrained disparity vector,
   predicting a second disparity vector of a DCP block based on the constrained disparity vector, or
   replacing an unavailable inter-view motion vector based on the constrained disparity vector if motion information of the corresponding block in the inter-view picture is not available or not valid in inter-view Merge candidate derivation.
3. The method of clause 1, wherein if optical axes of multiple cameras of the three-dimensional video encoding or decoding system are configured to be parallel in a horizontal plane and views associated with the multiple cameras are rectified such that no vertical disparities exist, the vertical component of the disparity vector is constrained to be zero or within the range from M to N units of DV precision.
4. The method of clause 1, wherein if optical axes of multiple cameras of the three-dimensional video encoding or decoding system are configured to be parallel in a vertical plane and views associated with the multiple cameras are rectified such that no horizontal disparities exist, the horizontal component of the disparity vector is constrained to be zero or within the range from M to N units of DV precision.
5. The method of clause 1, wherein one syntax element is signaled in a sequence level, a view level, a picture level, a slice level, an LCU level, a CU level, or a PU level to indicate whether said constraining the first disparity vector is turned on or off.
6. A method for three-dimensional video encoding or decoding the method comprising:
   receiving first data associated with a current block of a current frame corresponding to a current view;
   determining a derived disparity vector for disparity-vector based motion-compensated-prediction (DV-MCP) of the current block, wherein the derived disparity vector is derived from a constrained neighboring block set of the current block, and the constrained neighboring block set corresponds to one or more spatial neighboring blocks on left side of the current block, one or more collocated blocks of the current block, or both said one or more spatial neighboring blocks on the left side and said one or more collocated blocks of the current block; and
   applying inter-view predictive encoding or decoding to the first data based on the derived disparity vector.
7. The method of clause 6, wherein a search order for said determining the derived disparity vector from the constrained neighboring block set corresponds to (A0, A1, Col), (A0, Col) or (A1, Col), where A0 corresponds to a first location diagonally across from a lower-left corner of the current block,A1 corresponds to a second location next to a bottom-left side of the current block, and Col corresponds to a third location collocated with the current block.
8. The method of clause 6, wherein said inter-view predictive encoding or decoding includes:
   locating a corresponding block in an inter-view picture for disparity compensated prediction (DCP), inter-view motion prediction, or inter-view residual prediction based on the derived disparity vector,
   predicting the disparity vector of a DCP block based on the derived disparity vector, or
   replacing an unavailable inter-view motion vector based on the derived disparity vector if motion information of the corresponding block in the inter-view picture is not available or not valid in inter-view Merge candidate derivation.
9. The method of clause 6, wherein one syntax element is signaled in a sequence level, a view level, a picture level, a slice level, an LCU level, a CU level, or a PU level to indicate whether said determining the derived disparity vector for the DV-MCP of the current block based on the constrained neighboring block set is turned on or off.
10. A method for three-dimensional video encoding or decoding the method comprising:
   receiving first data associated with a current block of a Largest Coding Unit (LCU) in a current frame corresponding to a current view;
   determining a derived disparity vector based on neighboring blocks of the current block, wherein the derived disparity vector is derived from a constrained neighboring block set of the current block, and the constrained neighboring block set excludes any temporal neighboring block located below a bottom boundary of a collocated LCU, wherein the collocated LCU and the LCU containing the current block are temporally collocated; and
   applying inter-view predictive encoding or decoding to the first data based on the derived disparity vector.
11. The method of clause 10, wherein said inter-view predictive encoding or decoding includes:
   locating a corresponding block in an inter-view picture for disparity compensated prediction (DCP), inter-view motion prediction, or inter-view residual prediction based on the derived disparity vector,
   predicting the disparity vector of a DCP block based on the derived disparity vector, or
   replacing an unavailable inter-view motion vector based on the derived disparity vector if motion information of the corresponding block in the inter-view picture is not available or not valid in inter-view Merge candidate derivation.
12. The method of clause 10, wherein one syntax element is signaled in a sequence level, a view level, a picture level, a slice level, an LCU level, a CU level, or a PU level to indicate whether said determining the derived disparity vector for disparity-vector based motion-compensated-prediction (DV-MCP) of the current block based on the constrained neighboring block set is turned on or off.
13. The method of clause 10, wherein the constrained neighboring block set excludes a temporal neighboring block corresponding to a Right-Bottom (RB) location diagonally across from a bottom right corner of the collocated LCU if the current block is located at a bottom row of the LCU.
14. A method for three-dimensional video encoding or decoding the method comprising:
   receiving first data associated with a current block of a current frame corresponding to a current view;
   determining a disparity vector difference (DVD) or a motion vector difference (MVD) for the current block, wherein the DVD or the MVD is determined according to a first disparity vector (DV) derived for the three-dimensional video encoding or decoding system using disparity compensated prediction (DCP), or the DVD or the MVD is determined according to a second DV for the three-dimensional video encoding or decoding system using Inter mode or advanced motion vector prediction (AMVP) and the second DV is selected as an Inter or AMVP candidate;
   constraining the DVD or MVD to generate a constrained DVD or MVD, wherein horizontal component, vertical component, or both the horizontal and vertical components of the constrained DVD or MVD is constrained to be zero or transmission or parsing of the DVD or MVD is skipped; and
   applying inter-view predictive encoding or decoding to the first data based on the constrained DVD or MVD.
15. The method of clause 14, wherein one syntax element is signaled in a sequence level, a view level, a picture level, a slice level, an LCU level, a CU level, or a PU level to indicate whether said constraining the DVD or MVD is turned on or off.
16. A method for three-dimensional video encoding or decoding the method comprising:
   receiving first data associated with a current block of a current frame corresponding to a current view;
   determining a derived disparity vector derived based on a motion vector of a neighboring block set of the current block according to a search order to replace an inter-view Merge candidate if the inter-view Merge candidate of the current block is not available or not valid, wherein the neighboring block set consists of A0, A1, B0, B1, B2 and Col, wherein A0, A1, B0, B1, and B2 correspond to a first location diagonally across from a lower-left corner, a second location next to a bottom-left side, a third location diagonally across from an upper-right corner, a fourth location next to a top-right side, and a fifth location diagonally across from an upper-left corner of the current block respectively, Col corresponds to a sixth location collocated with the current block; and
   applying inter-view predictive encoding or decoding to the first data using the derived disparity vector as the inter-view Merge candidate.
17. The method of clause 16, wherein the derived disparity vector corresponds to first or second available motion vector of the neighboring block set of the current block according to the search order.
18. The method of clause 16, wherein only a vertical or horizontal component of the derived disparity vector is used as the inter-view Merge candidate.
19. The method of clause 16, wherein an offset disparity vector is used as the inter-view Merge candidate, wherein an offset value is added to a vertical or horizontal component of the derived disparity vector to generate the offset disparity vector.

## Claims

1. A method for three-dimensional video encoding or decoding the method comprising:
receiving first data associated with a current block of a current frame corresponding to a current view;
determining a derived disparity vector for disparity-vector based motion-compensated-prediction (DV-MCP) of the current block, wherein the derived disparity vector is derived from a constrained neighboring block set of the current block, and the constrained neighboring block set corresponds to one or more spatial neighboring blocks on left side of the current block, one or more collocated blocks of the current block, or both said one or more spatial neighboring blocks on the left side and said one or more collocated blocks of the current block; and
applying inter-view predictive encoding or decoding to the first data based on the derived disparity vector.

2. The method of Claim 1, wherein a search order for said determining the derived disparity vector from the constrained neighboring block set corresponds to (A0, A1, Col), (A0, Col) or (A1, Col), where A0 corresponds to a first location diagonally across from a lower-left corner of the current block,A1 corresponds to a second location next to a bottom-left side of the current block, and Col corresponds to a third location collocated with the current block.

3. The method of Claim 1, wherein said inter-view predictive encoding or decoding includes:
locating a corresponding block in an inter-view picture for disparity compensated prediction (DCP), inter-view motion prediction, or inter-view residual prediction based on the derived disparity vector,
predicting the disparity vector of a DCP block based on the derived disparity vector, or
replacing an unavailable inter-view motion vector based on the derived disparity vector if motion information of the corresponding block in the inter-view picture is not available or not valid in inter-view Merge candidate derivation.

4. The method of Claim 1, wherein one syntax element is signaled in a sequence level, a view level, a picture level, a slice level, an LCU level, a CU level, or a PU level to indicate whether said determining the derived disparity vector for the DV-MCP of the current block based on the constrained neighboring block set is turned on or off.

5. An apparatus for three-dimensional video encoding or decoding, comprising one or more electronic circuits arranged to:
receive first data associated with a current block of a current frame corresponding to a current view;
determine a derived disparity vector for disparity-vector based motion-compensated-prediction (DV-MCP) of the current block, wherein the derived disparity vector is derived from a constrained neighboring block set of the current block, and the constrained neighboring block set corresponds to one or more spatial neighboring blocks on left side of the current block, one or more collocated blocks of the current block, or both said one or more spatial neighboring blocks on the left side and said one or more collocated blocks of the current block; and
apply inter-view predictive encoding or decoding to the first data based on the derived disparity vector.

6. The apparatus of Claim 5, wherein a search order for said determining the derived disparity vector from the constrained neighboring block set corresponds to (A0, A1, Col), (A0, Col) or (A1, Col), where A0 corresponds to a first location diagonally across from a lower-left corner of the current block,A1 corresponds to a second location next to a bottom-left side of the current block, and Col corresponds to a third location collocated with the current block.

7. The apparatus of Claim 5, wherein said inter-view predictive encoding or decoding includes:
locating a corresponding block in an inter-view picture for disparity compensated prediction (DCP), inter-view motion prediction, or inter-view residual prediction based on the derived disparity vector,
predicting the disparity vector of a DCP block based on the derived disparity vector, or
replacing an unavailable inter-view motion vector based on the derived disparity vector if motion information of the corresponding block in the inter-view picture is not available or not valid in inter-view Merge candidate derivation.

8. The apparatus of Claim 5, wherein one syntax element is signaled in a sequence level, a view level, a picture level, a slice level, an LCU level, a CU level, or a PU level to indicate whether said determining the derived disparity vector for the DV-MCP of the current block based on the constrained neighboring block set is turned on or off.
